Europäisches Patentamt

European Patent Office

Office européen des brevets

(19)

(11) Publication number: **0 124 435**
**B1**

# (12) EUROPEAN PATENT SPECIFICATION

(45) Date of publication of patent specification: **29.06.88**

(51) Int. Cl.⁴: **G 11 B 5/31**

(21) Application number: **84400829.2**

(22) Date of filing: **25.04.84**

(54) Thin-film magnetic head with improved wear-guide.

(30) Priority: **27.04.83 US 488965**

(43) Date of publication of application:
**07.11.84 Bulletin 84/45**

(45) Publication of the grant of the patent:
**29.06.88 Bulletin 88/26**

(84) Designated Contracting States:
**DE FR GB NL**

(56) References cited:
**DE-A-2 129 488**
**DE-A-2 341 649**
**GB-A-2 044 509**

**SOVIET INVENTIONS ILLUSTRATED, section
EL, week C 39, November 5, 1980, DERWENT
PUBLICATIONS LTD, London T 03 & SU-712
831**

**SOVIET INVENTIONS ILLUSTRATED, section
EL, week E 01, February 17, 1982, DERWENT
PUBLICATIONS LTD, London T 03 & SU-815
751**

(73) Proprietor: **EASTMAN KODAK COMPANY
343 State Street
Rochester New York 14650 (US)**

(72) Inventor: **McClure, Richard J.
9988 Cummins Place
San Diego California 92131 (US)**
Inventor: **Freeman, Jay Davis
443 Dunsmore Court
Encinitas California 92024 (US)**

(74) Representative: **Parent, Yves et al
Kodak-Pathé Département Brevets et Licences
Centre de Recherches et de Technologie Zone
Industrielle
F-71102 Chalon-sur-Saône Cédex (FR)**

Courier Press, Leamington Spa, England.

## Description

### Field of the invention

This invention relates to magnetic heads and in particular to multitrack heads having a high density of discrete head cores (channels) per centimeter across the face thereof. More specifically, it relates to improvements in wear-guides for use in thin-film multitrack heads.

### The prior art

High density magnetic recording as employed, for example, in connection with the recording of video information is usually done by means of a single-track head which traverses, and coacts at high speed with, a magnetic tape. Examples of apparatus capable of such recording are quadruplex and helical scan video recorders.

It has long been desired to obviate the need for high relative head-to-tape speed by use of a stationary multitrack magnetic head, whereby image signals associated with video lines could be recorded to respective tracks that are parallel to the length of a relatively slow moving tape. Multitrack magnetic heads capable of recording, say, 400 tracks across the 2.54 cm. width of typical magnetic tape have, to date, been beyond the state of the art. Not only is "track density" a formidable problem, but precise track dimensioning and precise (and uniform) track-to-track spacing are demanding considerations. Indeed, a multitrack head capable of recording 400 tracks across a 2.54 cm. wide tape would require that the track-to-track spacing be a mere 62.5 microns; and given a standard guard band between tracks, a typical track width would be about 10 to 25 microns.

Putting additional stress on the demanding considerations indicated above is the matter of cost. Whereas it might, perhaps, be possible to assemble (tendiously) the parts necessary to make a multitrack head of the type under discussion, it is another matter to make multitrack heads, in a high yield process, at low cost. This means that batch fabrication of multitrack heads is a must; and, corollarily, head design must be such as to be susceptible to batch fabrication.

It is well known that batch fabrication of multitrack magnetic heads may be provided by use of photolithographic and deposition techniques, whereby patterened thin-films of magnetic, electrically conductive, and electrically non-conductive material are formed—on a suitable substrate—according to any of a number of head designs. Having formed a "batch" of such designs on a substrate, the substrate may then be diced into individual thin-film multitrack head structures as desired.

The substrate and the individual core pieces of multitrack thin-film heads are relatively frangible and, as such, must be structurally supported during both head finishing and head usage. Moreover, during head manufacture, it is essential that the gap depth of the core pieces be both precise and uniform from track-to-track. Heretofore, thin-film wear-guides have been deposited on selected parts of multitrack thin-film heads to provide the necessary support function and indication of gap depth. These wear-guides are useful both in the head-finishing process of new heads (to monitor the degree of head wear which occurs during the lapping operation), as well as during actual use of the heads to indicate the life remaining. Such wear-guides have, typically, been in the form of inverted triangles (situated between head cores) of a distinguishable metal, e.g. copper. The base of the triangles is coplanar with the face of the head. The length of each such triangle base, therefore, serves to provide an indication of gap depth...the longer the base of the deposited triangle, the greater the depth of the gap under examination. (Chevrons and the like have also been contemplated for wear-guide purposes).

A key problem associated with the use of a wear-guide of the type mentioned above is that, as a result of head wear, such a wear-guide gradually vanishes as it does its job of indicating the depth of a gap. While a vanishing wear-guide exacerbates the problem of providing gap depth definition as the guide becomes harder to see, more importantly, a vanishing wear guide gradually leaves the head substrate and adjacent core pieces more and more vulnerable to abrasive attack by the recording medium with which it cooperates; and, in the case of a ferrite substrates and core pieces, the abrasive attack may cause the ferrite to crumble away. Ferrite material, as is known, is quite hard and frangible, and in the event ferrite particles do indeed become embedded in the recording medium, such will play havoc not only with hard wearability, but with matters of head to medium spacing as well.

The problem of "vulnerability to abrasive attack of the head substrate may, for example, be solved by means of a structure which has an invariant core-to-core dimension, viz. a rectangular structure; but such solution, it will be appreciated, would destroy the needed "indicator" function. As will be indicated below, the overall problem solved by the invention is, thus, that of providing a wear guide for a thin film multitrack magnetic head that provides both an invariant substrate support, while simultaneously serving as a wear indicator as well.

### Summary of the invention

An object of this invention is to provide a thin-film multitrack head having wear-guides which continuously provide full substrate and core piece support as the head gradually wears out, and which remains equally visible regardless of the stage of head wear. According to the invention, wear-guides are provided which have a core-to-core dimension which is substantially invariant with head wear. The wear guides have a rectangular configuration, and each is provided with a discontinuity (e.g. an angled slot) at the medium contacting surface. As the head wears out, the wear-guide retains their substrate-supporting between-core dimensions, and the discontinuity of each wear-guide appears to move, like a "pointer", in the direction of core-to-core spacing, thereby indicating the depths of the head core gaps. By using the same material for wear-guide as is employed for the head cores, the ferrite substrate is mechanically supported essentially across the whole length of the line of core gaps by the very same material, a factor which leads to improved life and wearability of the head.

Brief description of the drawings

The invention will be described with reference to the figures, of which:

Figure 1 is a perspective view illustrating wafer-handling of head structures according to the invention;

Figure 2 is a side elevational view of a head structure according to the invention before a lapping procedure;

Figure 3 is a top view of the head structure of Fig. 2 after the indicated lapping procedure;

Figure 4 is a side elevational view of the head structure of Fig. 2 after the indicated lapping procedure; and

Figures 5 and 6 are views illustrating how the head structure of Figs. 3 and 4 is readied for use.

Detailed description of preferred embodiments

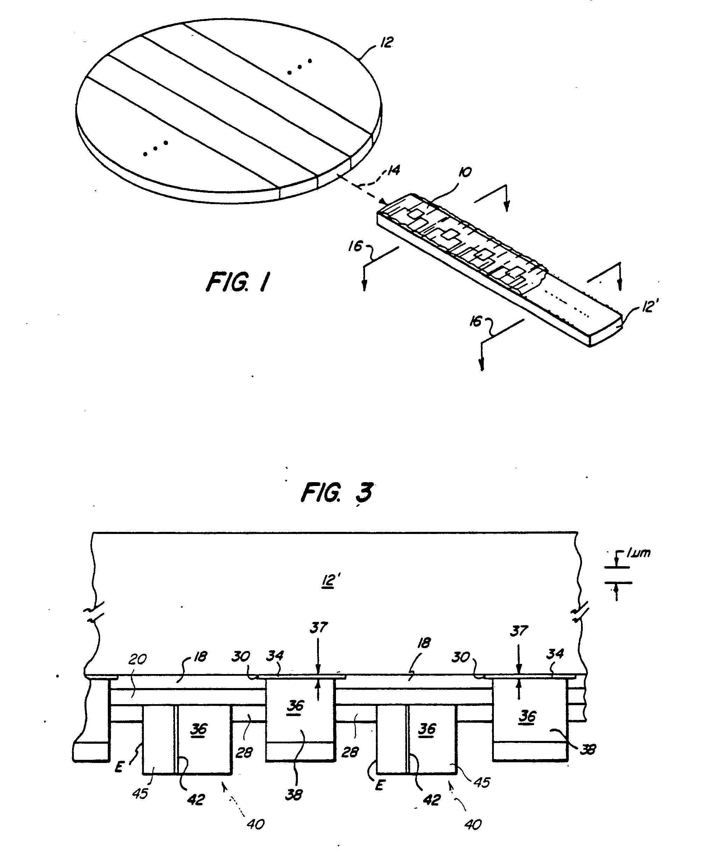

Referring to Fig. 1, a "batch" of coil-supporting head cores 10 is formed—by a film deposition technique to be described below—on a wafer 12 which may be of ferrite material, or which may be of non-magnetic material having a magnetic coating thereon. The wafer is diced (arrow 14), and then cut (arrows 16) to an appropriate size depending on the number of cores necessary to form a head under construction.

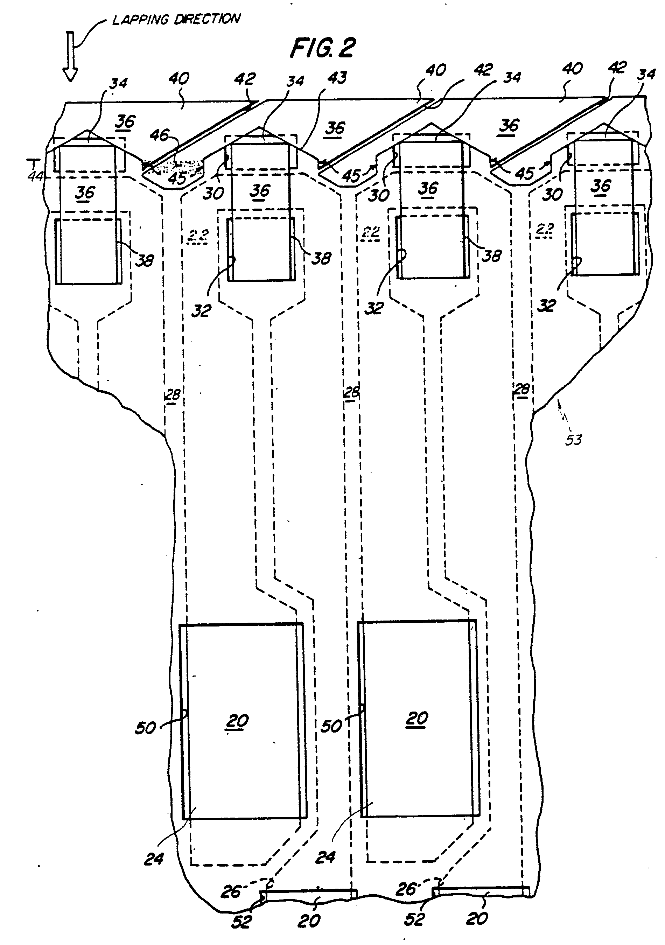

Concerning the matter of film deposition, reference should now be made to Figs. 2—4...it being understood that, for ease of understanding, the discussion which follows is directed to film depositions as applied to a diced substrate section 12' of the (ferrite) wafer 12: A 1-micron thick coating 18 of $SiO_2$ is first vacuum deposited over the ferrite substrate section 12'. Thereafter, an electrically conductive material 20, e.g. copper, is vacuum deposited to about 1-micron over the $SiO_2$ coating 18; and then, utilizing photolithography, the electrically conductive material is etched to form a succession of one-turn coils 22 having bonding pads 24, 26.

With the one-turn coils so formed, a second 1-micron thick coating 28 of $SiO_2$ is then vacuum deposited over the substrate section 12', thereby encapsulating the electrically conductive coil structures 22, 24, 26. Again using photolithography, windows 30, 32 are etched through the two $SiO_2$ coatings 18, 28 to expose the ferrite of the substrate section 12'...after which an extremely thin coating, e.g. to about $3.7 \times 10^{-4}$ mm., of non-magnetic core gapping material 34, e.g. $SiO_2$, is deposited within the windows 30...but not within the windows 32.

At this juncture, magnetic material 36, such as permalloy, is deposited over the entire windowed $SiO_2$ coating 28...and such magnetic material which gets deposited within the windows 32 magnetically short circuits to the ferrite substrate section 12'. Permalloy is preferred to this connection because, as has been found, it tends to lay nicely over the topographic "hills and valleys" of the various predeposited films. Again utilizing photolithography, gapped (37) transducer core structures 38 are now formed from (1) the magnetic material 66 which gets deposited within the windows 30, 32, (2) the underlying ferrite substrate section 12', and (3) the core gapping material 34 within the windows 30.

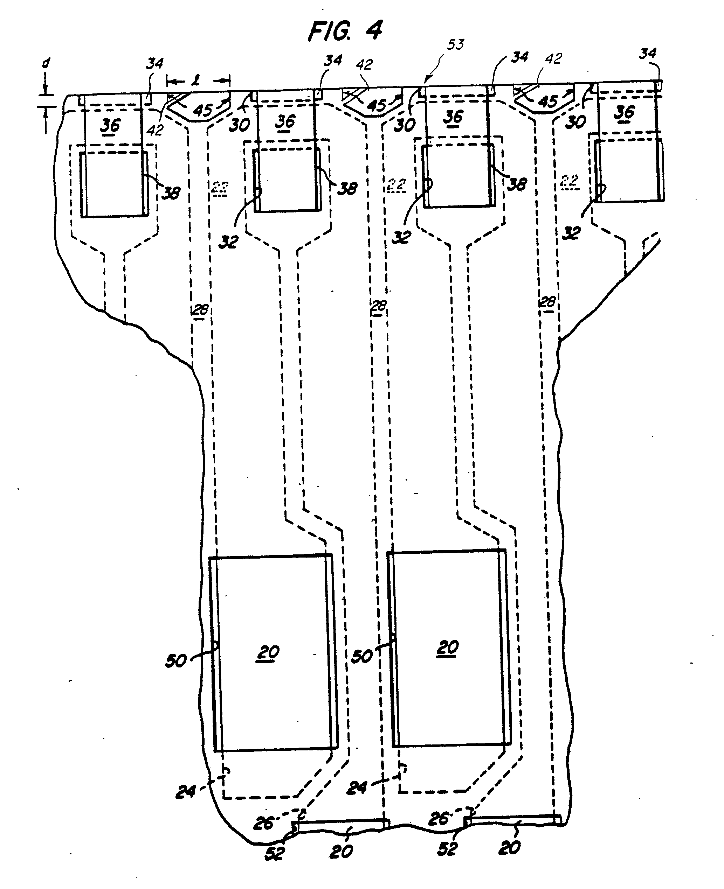

When the core structures 38 are photolithographically formed as indicated above wear-guide patterns 40 are also formed of the magnetic material 36. To be noted is that the wear-guide patterns 40 have respective narrow slots 42 etched angularly across them (see Figs. 2 and 4). There are two main parts to each wear-guide pattern: a first part 43 that extends above the lap line 44 shown in Fig. 2; and a second part 45 (of rectangular cross-section) that extends below the lap line 44 and above a line that is approximately coextensive with a zero gap depth. For ease of understanding, stippling 46 has been employed in Fig. 2 to identify one of the rectangularly shaped wear-guide parts 45.

Again utilizing photolithography, the $SiO_2$ coating 28 is etched to form windows 50, 52 which expose the bonding pads 24, 26 for connection to external hardware.

To provide an initial core gap depth d (Fig. 4) for the head under construction, the structure of Fig. 2 is mounted in a jig and (using the wear-guide parts 43 as guides) lapped in the indicated direction until the slots 42 appear as indicated in the view of Fig. 3. Thereafter, as the head wears out, the slots 42 gradually move to the left in Fig. 3 like "pointers", stopping at the edges E when the head is fully worn out.

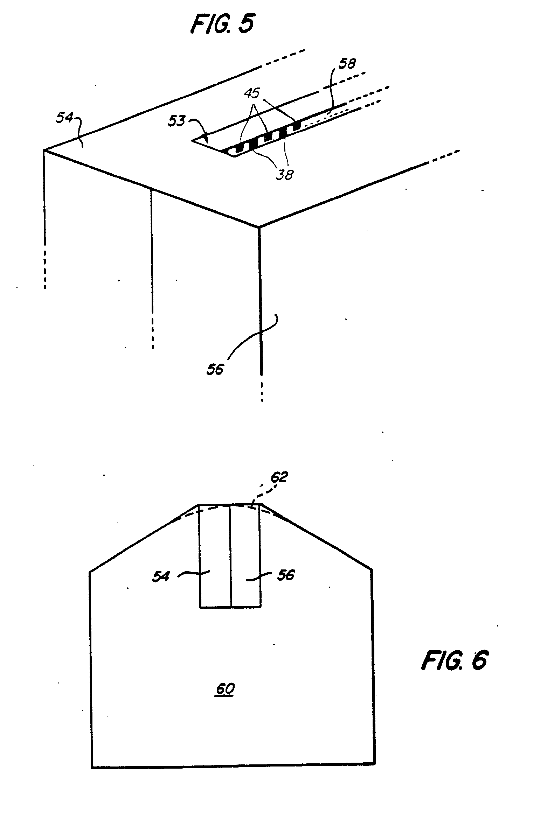

Next, the head structure 53 of Figs. 3, 4 is bonded (see Fig. 5) within a cradle 54...preferably made of ceramic; and the cradle 54 is capped by a lid 56...also preferably of ceramic...that is bonded to the cradle. Epoxy or bonding glass serves as a filler 58 between the head structure 53 and the lid 56. The structure of Fig. 5 is then mounted within a bracket 60 (see Fig. 6)...electrical heads to the bonding pads 24, 26 being brought out through the bracket 60. Thereafter, the structure of Fig. 6 is contoured as indicated by the contour line 62 thereof.

It will be appreciated that as the head structure of Figs. 3, 4 wears out (i.e. as the head core gap depths decrease to zero) the "pointer" 42 remains invariant in size (but gradually moves toward edge E). Moreover, the lengths l of the medium-contacting wear-guide parts 45 remain invarient. Thus, insofar as the recording medium is concerned, the ferrite that resides between the head cores is as protected against crumbling when the head is worn out as it is when the head is brand new.

Aside from the advantage of improved wearability for a thin-film head employing wear-guide indicators shaped as taught by the invention, additional advantages obtain as well: Improved track-to-track shielding may be provided by the existence of a relatively large amount of magnetic material between the cores...and which material has a core-to-core dimension which is invariant. By use of the same deposition material for wear-guide purposes as is used for the deposited core material of the head, the coefficient of expansion of the material at the medium contacting surface will be largely the same, thereby leading to improved structural integrity for the head. Similarly, sameness of material leads, desirably, to uniform wear rates for the material disposed to contact the recording medium.

## Claims

1. A thin-film multitrack magnetic head comprising first and second gapped magnetic core structures (38) formed of thin magnetic films on a magnetic substrate, and a wear-guide (40) disposed between adjacent core structures, characterized in that said wear-guide (40) has a core-to-core dimension l that is substantially invariant as said head wears out, whereby a continuous between core support for the substrate of said head is provided, said wear-guide being a thin-film of a given material having an angularly disposed discontinuity (42) therein that extends a vertical distance (d) from a line coextensive with the core gaps of said head to a point thereof that corresponds with a predetermined degree of wear for said head, whereby the position of said discontinuity at the face of said head constitutes an indication of the wear experienced by said head.

2. The magnetic head of Claim 1 characterized in that said discontinuity in said wear guide is a slot (42) that extends angularly beneath the outer surface of the wear-guide.

3. The magnetic head of Claim 1 characterized in that said core structures (38) and said wear-guide (40) are comprised of permalloy.

## Patentansprüche

1. Dünnschicht-Mehrspurmagnetkopf mit ersten und zweiten aus dünnen magnetischen Schichten auf einem magnetischen Substrat ausgebildeten Halbkernen (38) und mit einer zwischen benachbarten Halbkernen angeordneten Verschleißanzeige (40), dadurch gekennzeichnet, daß die Verschleißanzeige (40) von Halbkern zu Halbkern jeweils eine beim Verschleiß des Kopfes im wesentlichen unverändert bleibende Ausdehnung l besitzt, derart, daß die Verschließanzeige für das Substrat des Kopfes zwischen den Halbkernen eine durchgehende Stütze bildet, und wobei die Verschleißanzeige eine Dünnschicht aus einem gegebenen Material darstellt, in der eine unter einem Winkel verlaufende Unterbrechung (42) angeordnet ist, welche sich in einem vertikalen Abstand (d) von einer durch die Spalten des Kopfs verlaufenden Linie bis zu einem Punkt des Kopfes erstreckt, der einem vorbestimmten Verschließgrad des Kopfes entspricht, derart, daß die Lage der Unterbrechung auf der Endfläche des Kopfes eine Anzeige für dessen Verschleißgrad liefert.

2. Magnetkopf nach Anspruch 1, dadurch gekennzeichnet, daß die Unterbrechung in der Verschleißanzeige ein Schlitz (42) ist, der sich unter einem Winkel von der Außenfläche der Verschleißanzeige aus nach unten erstreckt.

3. Magnetkopf nach Anspruch 1, dadurch gekennzeichnet, daß die Halbkerne (38) und die Verschleißanzeige (40) aus Permalloy bestehen.

## Revendications

1. Tête magnétique multipiste à couches minces comprenant, d'une part, une première et une seconde structure d'entrefer magnétique (38) formées de couches magnétiques minces sur un support magnétique, et, d'autre part, une pièce d'usure (40) située entre deux structures d'entrefer magnétique voisines, tête caractérisée en ce que la pièce d'usure (40) d'une part présente une dimension 1, prise parallèlement aux entrefers, pratiquement invariante lors de l'usure de la tête, et d'autre part est constituée d'un matériau en couches minces présentant une discontinuité (42) faisant un angle avec la surface de la tête et s'étendant sur une distance verticale (d) à partir de cette surface vers un point correspondant à une usure déterminée de la tête de manière que la localization de cette discontinuité à la surface de la tête constitue une indication de l'usure subie par la tête.

2. Tête conforme à la revendication 1, caractérisée en ce que ladite discontinuité de la pièce d'usure est une fente (42) s'étendant vers l'intérieur de la pièce d'usure en faisant un angle avec la surface externe de ladite pièce d'usure.

3. Tête conforme à la revendication 1, caractérisée en ce que les structures d'entrefer (38) et la pièce d'usure (40) sont en ferronickel permalloy.

FIG. 1

FIG. 3

0 124 435

FIG. 2

LAPPING DIRECTION

## FIG. 4

## FIG. 5

## FIG. 6